# EUROPÄISCHE PATENTSCHRIFT

(11) **EP 0 365 759 B1**
(45) Veröffentlichungstag und Bekanntmachung des Hinweises auf die Patenterteilung: **08.03.1995**
(21) Anmeldenummer: 89113008.0
(22) Anmeldetag: 15.07.1989
(51) Int. Cl.: G02B 6/44

(54) **Lichtwellenleiterkabel**
Optical cable
Câble optique

(30) Priorität: 26.10.1988 DE 3836466
(43) Veröffentlichungstag der Anmeldung: 02.05.1990
(73) Patentinhaber: KABEL RHEYDT Aktiengesellschaft, D-41179 Mönchengladbach (DE)
(72) Erfinder: Haag, Helmut, D-5177 Titz 1 (DE); Hög, Georg, D-4050 Mönchengladbach 2 (DE); Hoffart, Michael, D-5628 Heiligenhaus (DE); Ropertz, Berndt, D-4050 Mönchengladbach 6 (DE); Thönnessen, Günter, Dr., D-4019 Monheim (DE)
(74) Vertreter: Mende, Eberhard, Dipl.-Ing.

(56) Entgegenhaltungen:
- EP-A- 0 256 704
- DE-A- 3 205 616
- GB-A- 1 598 540
- US-A- 4 365 865
- PROCEEDINGS OF THE 27TH INTERNATIONAL WIRE & CABLE SYMPOSIUM, Band 27, 1978, Zeilen 404-410 ; T.S. SWIECICKI et al. : "Unit core cable structures for optical communications systems"

## Beschreibung

LWL-Kabel werden beispielsweise als Luftkabel für die Elektrizitätsversorgung verwendet. LWL ist die Abkürzung für Lichtwellenleiter. Im speziellen Fall eines LWL-Erdseilluftkabels dienen die Lichtwellenleiter als Erdseil.

Derartige kabel sind zum Beispiel aus GB-A- 1 598 540 oder DE-A- 3 205 616 bekannt.

Es gibt seit langer Zeit Luftkabel mit metallischer Armierung (Erdseil-Luftkabel) mit Cu-Leitern. Davon wurden LWL-Luftkabel abgeleitet, indem die Cu-Leiter durch LWL-Adern ersetzt wurden. Der Kern solcher Luftkabel besteht somit aus einer LWL-Seele mit einem mehr oder weniger dicken PE-Mantel. Dieser Kern hat einen Durchmesser von 6 bis 10 mm. Über dem Kern werden eine oder mehrere Lagen Drähte (rund oder segmentiert) verseilt. Die zugkraftaufnehmenden Stahl- oder Aluminium-ummantelten Stahldrähte (Stalum) sind in der äußersten oder zweiten Lage von außen angeordnet, um einen sicheren Kraftschluß zur Spiralarmatur zu gewährleisten. Der Nachteil solcher Luftkabel besteht darin, daß im Inneren des Luftkabels für die LWL-Seele 30 bis 80 mm² Querschnitt leitungsbezogen nutzlos verschwendet werden und infolgedessen die Kabel 3 bis 7 mm dicker sind als Leiterseile mit dem gleichen tragenden/leitenden Querschnitt.

Der Erfindung liegt die Aufgabe zugrunde, die Durchmesserzunahme durch den nur übertragungstechnisch relevanten LWL-Teil so gering wie möglich zu halten und die Fasern der LWL-Adern sicher vor Umgebungseinflüssen wie Zug und Druck zu schützen. Diese Aufgabe wird bei einem LWL-Kabel mit einem Kern, LWL-Adern und elektrischen Leitern nach der Erfindung durch das Kennzeichen des Anspruchs 1 gelöst.

Die Erfindung gewährleistet eine sichere Befestigung der Luftkabel an Trag- und Abspannmasten mittels Spiralarmaturen, d. h. den Stahlanteil möglichst weit nach außen zu bringen. Außerdem ermöglicht die Erfindung eine möglichst gleiche Lösung für Luftkabel mit 2 bis 12 LWL sowie eine sichere Muffenmontage, d. h. ein einfaches Trennen des oder der LWL-Teile vom Seil.

Geht man davon aus, daß bei einem LWL-Kabel nach der Erfindung für je maximal 3 Fasern eine LWL-Ader von 2 mm Durchmesser ausreichend ist, dann beträgt die erforderliche Querschnittszunahme für ein 12-faseriges Luftkabel z. B. 12,5 mm². Bei einem leitungstechnisch erforderlichen Querschnitt von z. B. 150 mm² bedeutet das eine Querschnittsvergrößerung von 8 % gegenüber den bisher bekannten Luftkabeln von 20 - 52 %, also eine Durchmesserzunahme von 4 % gegenüber 10 - 23 %. Bei einem Seilquerschnitt von 300 mm² (Al/St 265/35) sind es sogar nur noch 2% Durchmesserzunahme. D. h. ein Luftkabel hätte gegenüber dem vergleichbaren Seil einen Durchmesser von 20,4 mm gegenüber 20,0 mm. Der geschilderte Vortei wird bei der Erfindung dadurch erreicht, daß Leitungsseilelemente - wie Runddrähte und Profildrähte - die Lagefixierung und den Schutz der LWL-Adern übernehmen.

Die Erfindung wird im folgenden an einem Ausführungsbeispiel erläutert.

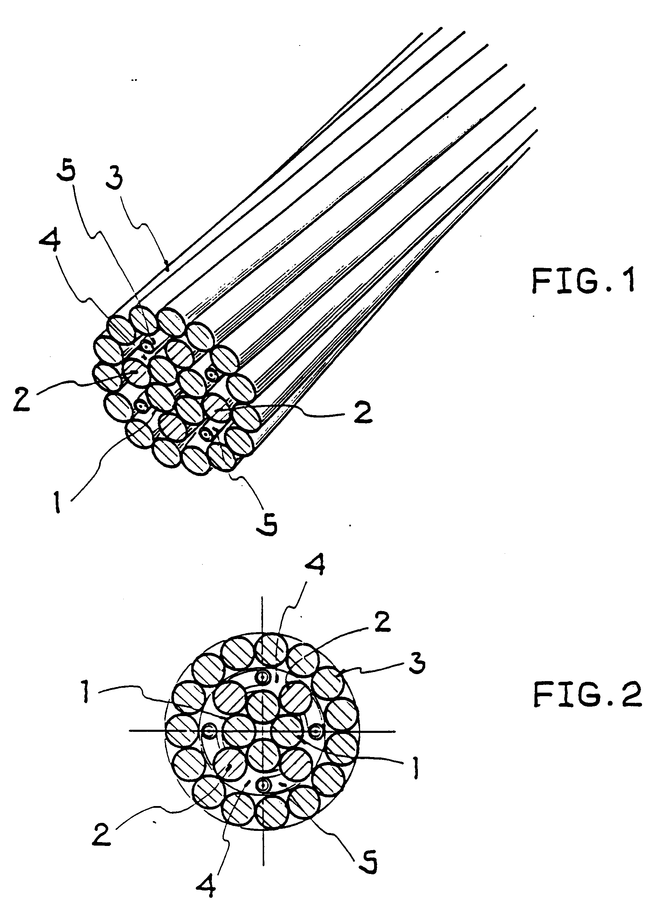

Die Figuren 1 und 2 zeigen ein LWL-Kabel nach der Erfindung, welches als LWL-Erdseilkabel verwendet werden kann. Beim LWL-Kabel nach der Erfindung besteht der Kern gemäß den Figuren 1 und 2 aus vier miteinander verseilten elektrischen Drähten 1, die zu einem "Vierer" verseilt sind. In den Außenzwickeln des Kerns, die durch die elektrischen Drähte 1 gebildet werden, befinden sich elektrische Drähte 2, die einen den Kern umgebende erste Lage bilden. Die Drähte 2 der ersten Lage bestehen z. B. aus Aluminium, einer Aluminiumliegierung (Aldrey) oder aus aluminiumummanteltem Stahl (Stalum). Die Drähte 2 der ersten Lage werden durch die Außenzwickel des durch die Drähte 1 gebildeten Kerns fixiert. Durch die den Kern bildenden Drähte 1, durch die Drähte 2 der ersten Lage sowie durch die Drähte 3 einer zweiten Lage werden Kammern 4 gebildet, in die LWL-Adern 5 (Hohl/Bündeladern) eingelegt werden. Die Durchmesser der LWL-Adern 5 und der Drähte 2 der ersten Lage sowie der Durchmesser des durch die Drähte 1 gebildeten Kerns und die Tiefe sowie die Außenzwickel des Kerns sind so aufeinander abgestimmt, daß im fertigen Zustand der Umkreis, der durch die Drähte 2 der ersten Lage gebildet wird, die LWL-Adern 5 nicht bzw. nur leicht fixierend berührt. Um die Faserbeweglichkeit über den erforderlichen Stauch- und Dehnungsbereich zu gewährleisten und gleichzeitig eine Flexibilität dieser inneren Seele zu ermöglichen, sind die Drähte 2 der ersten Lage und damit auch die Außenzwickel des Kerns spiralig mit einem Schlaglängenverhältnis von 6 bis 12 ausgeführt.

Die Drähte 3 der über der ersten Lage befindlichen zweiten Lage sowie die Drähte gegebenenfalls weiterer Lagen werden jeweils in Gegenrichtung zu den Drähten der darunter befindlichen Lage aufgebracht. Das Schlaglängenverhältnis der zweiten Lage bzw. weiterer Lagen richtet sich nach DIN 41 200 und liegt in der Größenordnung von 10 bis 15. Im Ausführungsbeispiel bilden der durch die Drähte 1 gebildeten Kern, die Drähte 2 der ersten Lage sowie die Drähte 3 der zweiten Lage sichere stabile Kammern 4 für die LWL-Adern 5.

Die Drähte der einzelnen Lagen können unterschiedliche Durchmesser haben.

## Patentansprüche

1. Lichtwellenleiterkabel bestehend aus einem Kern aus verseilten Kerndrähten (1) sowie darüber lageweise verseilten Lichtwellenleitern (5) und Drähten (2, 3), wobei der Kern aus im Verseilverband Außenzwickel bildenden elektrischen Drähten (1) besteht, dadurch gekennzeichnet, daß in diesen Außenzwickeln die elektrischen Drähte (2) einer ersten Lage angeordnet sind, wobei jeweils die in zwei benachbarten Außenzwickeln angeordneten elektrischen Drähte (2) zusammen mit den Drähten (3) einer darüber liegenden zweiten Lage in diesem Bereich eine in Achsrichtung wendelförmig verlaufende Kammer (4) bilden, in der die Lichtwellenleiter-Adern (5) angeordnet sind.

2. Lichtwellenleiter-Kabel nach Anspruch 1, dadurch gekennzeichnet, daß vier elektrische Leiter (1) zu einem Viererkern verseilt sind.

3. Lichtwellenleiter-Kabel nach Anspruch 1 oder 2, dadurch gekennzeichnet, daß die elektrischen Leiter Drähte sind.

4. Lichtwellenleiter-Kabel nach einem der Ansprüche 1 bis 3, dadurch gekennzeichnet, daß die Außenzwickel spiralig entlang der Kabelachse verlaufen.

5. Lichtwellenleiter-Kabel nach einem der Ansprüche 1 bis 4, dadurch gekennzeichnet, daß die Lagen mit lageweise wechselnder Schlagrichtung verseilt angeordnet sind.

6. Lichtwellenleiter-Kabel nach einem der Ansprüche 1 bis 5, dadurch gekennzeichnet, daß die LWL-Adern (5) und die elektrischen Leiter (2) der ersten Lage so dimensioniert sind, daß die elektrischen Leiter (2) der zweiten Lage die LWL-Adern (5) nicht berühren.

7. Lichtwellenleiter-Kabel nach einem der Ansprüche 1 bis 6, dadurch gekennzeichnet, daß die Drähte (2) der ersten Lage in den Außenzwickeln des Kerns in einem solchen Abstand voneinander angeordnet sind, daß die LWL-Adern (5) zwischen die Drähte (2) der ersten Lage zu liegen kommen, und daß die Drähte der beiden Lagen entgegengesetzte Schlagrichtungen haben, so daß die Kammern (4) für die LWL-Adern spiralig um die Kabelachse angeordnet sind.

8. Lichtwellenleiter-Kabel nach einem der Ansprüche 1 bis 7, dadurch gekennzeichnet, daß die Schlaglänge, mit der die Kammern (4) für die LWL-Adern (5) um die Kabelachse geführt sind, derart gewählt ist daß die Fasern in LWL-Hohl/Bündeladern (5) unter allen Seilbelastungen kräftefrei liegen.

9. Lichtwellenleiter-Kabel nach einem der Ansprüche 1 bis 8, dadurch gekennzeichnet, daß die LWL-Adern (5) einen solchen Querschnitt haben, daß sie in den Kammern (4) fixiert, jedoch nicht gequetscht werden.

10. Lichtwellenleiter-Kabel nach einem der Ansprüche 1 bis 9, dadurch gekennzeichnet, daß das Schlaglängenverhältnis der ersten Lage zwischen 6 und 12 liegt.

11. Lichtwellenleiter-Kabel nach einem der Ansprüche 1 bis 10, dadurch gekennzeichnet, daß die LWL-Adern (5) Einzel- oder Bündeladern sind.

12. Lichtwellenleiter-Kabel nach einem der Ansprüche 1 bis 11, dadurch gekennzeichnet, daß die Adern eine Hülle aus Polyester, LCP oder GFK aufweisen.

13. Lichtwellenleiter-Kabel nach einem der Ansprüche 1 bis 12, dadurch gekennzeichnet, daß die elektrischen Leiter aus Aluminium oder Aldrey bestehen oder Alumoweld-Drähte sind.

## Claims

1. Optical fibre cable consisting of a core made of stranded core wires (1) and optical fibres (5) and wires (2, 3) stranded over said core wires in layers, the core consisting of electric wires (1) forming outer interstices in the composite strand, characterized in that in these outer interstices are arranged the electric wires (2) of a first layer, the electric wires (2) arranged in two adjacent outer interstices, together with the wires (3) of a second layer lying over the latter, in each case forming in this region a chamber (4) running in the axial direction in a spiral shape in which the optical fibre conductors (5) are arranged.

2. Optical fibre cable according to Claim 1, characterized in that four electric conductors (1) are stranded to form a quad core.

3. Optical fibre cable according to Claim 1 or 2, characterized in that the electric conductors are wires.

4. Optical fibre cable according to one of Claims 1 to 3, characterized in that the outer interstices run spirally along the axis of the cable.

5. Optical fibre cable according to one of Claims 1 to 4, characterized in that the layers are arranged with the layers stranded in alternate directions of lay.

6. Optical fibre cable according to one of Claims 1 to 5, characterized in that the optical fibre conductors (5) and the electrical conductors (2) of the first layer are dimensioned in such a way that the electric conductors (2) of the second layer do not touch the optical fibre conductors (5).

7. Optical fibre cable according to one of Claims 1 to 6, characterized in that the wires (2) of the first layer are arranged in the outer interstices of the core at such a distance from each other that the optical fibre conductors (5) come to lie between the wires (2) of the first layer, and in that the wires of both layers have opposed directions of lay, so that the chambers (4) for the optical fibre conductors are arranged spirally around the axis of the cable.

8. Optical fibre cable according to one of Claims 1 to 7, characterized in that the length of lay with which the chambers (4) for the optical fibre conductors (5) are guided around the axis of the cable is chosen in such a way that the fibres in optical fibre hollow/multifibre conductors (5) are free of forces under all cable stresses.

9. Optical fibre cable according to one of Claims 1 to 8, characterized in that the optical fibre conductors (5) have such a cross-section that they are fixed in the chambers (4) but not squashed.

10. Optical fibre cable according to one of Claims 1 to 9, characterized in that the pitch-to-length ratio of the first layer is between 6 and 12.

11. Optical fibre cable according to one of Claims 1 to 10, characterized in that the optical fibre conductors (5) are individual conductors or multifibre conductors.

12. Optical fibre cable according to one of Claims 1 to 11, characterized in that the conductors have a sleeve made of polyester, LCP (liquid-crystal polymer) or GRP (glass-fibre reinforced plastic).

13. Optical fibre cable according to one of Claims 1 to 12, characterized in that the electric conductors consist of aluminium or Aldrey or are wires made of Alumoweld.

## Revendications

1. Câble de guides d'ondes lumineuses constitué d'un noyau de conducteurs câblés (1) ainsi que de guides d'ondes lumineuses (5) et de conducteurs (2, 3) câblés par couche par-dessus, le noyau étant constitué de conducteurs électriques (1) formant des triangles curvilignes extérieurs dans le complexe du câble, caractérisé par le fait que dans les triangles curvilignes extérieurs sont disposés les conducteurs électriques (2) d'un première couche, les conducteurs électriques (2), disposés dans deux triangles curvilignes extérieurs voisins formant chaque fois dans cette zone, avec les conducteurs (3) d'une seconde couche située par-dessus, une chambre (4) qui est orientée en hélice selon la direction axiale et dans laquelle sont disposés les guides d'ondes lumineuses (5.

2. Câble de guides d'ondes lumineuses selon la revendication 1, caractérisé par le fait que quatre conducteurs électriques (1) sont câblés pour donner un noyau en quarte.

3. Câble de guides d'ondes lumineuses selon la revendication 1 ou 2, caractérisé par le fait que les conducteurs électriques sont des fils métalliques.

4. Câble de guides d'ondes lumineuses selon l'une des revendications 1 à 3, caractérisé par le fait que les triangles curvilignes extérieurs sont orientés en hélice le long de l'axe du câble.

5. Câble de guides d'ondes lumineuses selon l'une des revendications 1 à 4, caractérisé par le fait que les couches sont disposées câblées avec le sens du commettage alternant par couche.

6. Câble de guides d'ondes lumineuses selon l'une des revendications 1 à 6, caractérisé par le fait que les guides d'ondes lumineuses (5) et les conducteurs électriques (2) de la première couche sont dimensionnés de façon que les conducteurs électriques (2) de la seconde couche ne touchent pas les guides d'ondes lumineuses (5).

7. Câble de guides d'ondes lumineuses selon l'une des revendications 1 à 6, caractérisé par le fait que les conducteurs (2) de la seconde couche sont disposés, dans les triangles curvilignes extérieurs du noyau, à une distance l'un de l'autre telle que les guides d'ondes lumineuses (5) viennent se placer entre les conducteurs (2) de la première couche et que les conducteurs des deux couches présentent des sens opposés de commettage de sorte que les chambres (4) pour les guides d'ondes lumineuses sont disposées en hélice autour de l'axe du câble.

8. Câble de guides d'ondes lumineuses selon l'une des revendications 1 à 7, caractérisé par le fait que l'on choisit la longueur de commettage selon laquelle les chambres (4) pour les guides d'ondes lumineuses (5) sont guidées autour de l'axe du câble de façon que les fibres se trouvant dans les guides d'ondes lumineuses (5) en faisceaux creux ne subissent pas de contrainte quelles que soient les contraintes du câble.

9. Câble de guides d'ondes lumineuses selon l'une des revendications 1 à 8, caractérisé par le fait que les guides d'ondes lumineuses (5) présentent une section telle qu'ils se fixent dans les chambres (4) mais ne sont pas écrasés.

10. Câble de guides d'ondes lumineuses selon l'une des revendications 1 à 9, caractérisé par le fait que le rapport entre le pas et le diamètre de la première couche vaut entre 6 et 12.

11. Câble de guides d'ondes lumineuses selon l'une des revendications 1 à 10, caractérisé par le fait que les guides d'ondes lumineuses (5) sont isolés ou en faisceau.

12. Câble de guides d'ondes lumineuses selon l'une des revendications 1 à 11, caractérisé par le fait que les conducteurs présentent une gaine en polyester, en polymère sous forme de cristaux liquides ou en plastique armé de fibres de verre.

13. Câble de guides d'ondes lumineuses selon l'une des revendications 1 à 12, caractérisé par le fait que les conducteurs électriques sont constitués d'aluminium ou de l'alliage d'aluminium Aldrey ou sont des fils d'alumoweld.
